# EUROPÄISCHE PATENTANMELDUNG

(11) **EP 1 578 008 A1**
(43) Veröffentlichungstag der Anmeldung: **21.09.2005**
(21) Anmeldenummer: 04005464.5
(22) Anmeldetag: 08.03.2004
(51) Int. Cl.: H02K 15/02, H02K 1/06

(54) **Verfahren zur Herstellung eines Blechpaketes für eine dynamoelektrische Maschine**

(71) Anmelder: SIEMENS AKTIENGESELLSCHAFT, 80333 München (DE)
(72) Erfinder: Burian, Jens, 99084 Erfurt (DE); Döhring, Ray, 99091 Erfurt (DE); Gruhle, Achim, 99100 Bienstädt (DE)

(57) **Zusammenfassung**

Die Erfindung betrifft ein Verfahren zur Herstellung eines Blechpakets (6) für eine dynamoelektrische Maschine (1), die durch folgende Schritte gekennzeichnet ist:
a) Greifen eines ersten Segmentbleches (2a),
b) Ablegen des ersten Segmentbleches (2a),
c) Greifen eines zweiten Segmentbleches (2b),
d) Ablegen des zweiten Segmentbleches (2b) auf das erste Segmentblech (2a),
e) Verbinden des ersten (2a) mit dem zweiten (2b) Segmentblech zu einer Segmentblechgruppe (2c),
f) Greifen der Segmentblechgruppe (2c),
g) Ablegen der Segmentblechgruppe (2c) zu einem Blechpaket (6).

## Beschreibung

Die Erfindung betrifft ein Verfahren zur Herstellung eines Blechpaketes für eine dynamoelektrische Maschine sowie ein Blechpaket und eine dynamoelektrische Maschine mit einem Blechpaket.

Unter einer dynamoelektrischen Maschine im Sinne der vorliegenden Anmeldung wird jeder Energiewandler verstanden, der elektrische in mechanische Energie oder mechanische in elektrische Energie umwandelt. Insbesondere ist unter einer dynamoelektrischen Maschine ein Generator zur elektrischen Energieversorgung zu verstehen.

Ein Generator als Ausführungsform einer dynamoelektrischen Maschine besteht unter anderem aus elektrisch aktiven Teilen, zu denen ein Ständer und ein drehbar gelagerter Läufer gehören. Der Ständer und der Läufer bestehen aus aufeinander geschichteten Segmentblechen, die auch als Eisenbleche bezeichnet werden können. Die Segmentbleche sind mit Nuten zur Aufnahme von Wicklungen versehen. Eine hohe Magnetisierbarkeit und kleine Hysterese- oder Wirbelstromverluste der Segmentbleche sind von Vorteil. Durch dünne Papier-, Lack- oder Oxidschichten werden die Segmentbleche gegeneinander isoliert. Ein komplett ausgebildeter Ständer oder Läufer besteht aus vielen Segmentblechen. Das Gebilde der aufeinander gestapelten Segmentbleche wird als Blechpaket bezeichnet.

Die Segmentbleche werden einzeln per Hand oder mit Hilfe einer Maschine aufeinandergestapelt. Das Stapeln der Segmentbleche per Hand zu einem Blechpaket ist langsam und aufwändig. Mit einer Maschine kann das Stapeln schneller ausgeführt werden, dafür ist der Kauf und die Unterhaltung aber kostspielig. Wenn die Maschine nicht genau eingestellt und/oder justiert ist, können die Segmentbleche verklemmt oder beschädigt werden. Dadurch würden zusätzliche Kosten entstehen.

Die JP-A-5799718 (Fujitsu) offenbart ein Verfahren zur Herstellung eines Blechpakets, das zur Verwendung als ein Teil eines verzahnten Blechpakets geeignet ist, um als Kern in einer elektromagnetischen Vorrichtung verwendet zu werden.

In der EP 0 843 881 B1 wird ein Verfahren zum Schichten von Blechpaketen, insbesondere für die Herstellung von kleineren Transformatoren-Kernen vorgestellt. Danach wird immer jeweils ein einzelnes Segmentblech maschinell lagerichtig abgelegt und in der abgelegten Position niedergehalten. Anschließend wird Klebstoff auf die Oberfläche des abgelegten Segmentbleches aufgetragen und ein weiteres Segmentblech auf die mit Klebstoff versehene Oberfläche abgelegt. Der Vorgang wird solange wiederholt bis ein Blechpaket aufgebaut ist. Das Niederhalten bewirkt einerseits, dass das zuletzt abgelegte Blech gegen das vorhergehende Blech gepresst wird und dass der dazwischen liegende Klebstoff richtig verteilt wird. Andererseits wird aber dabei auch verhindert, dass sich beim Auftragen der neuen Klebstoffschicht das abgelegte Segmentblech verschieben kann.

Eine Vorrichtung und ein Verfahren zur Herstellung von Blechpaketen wird auch in der DE 100 40 978 A1 beschrieben. Danach wird eine klein dimensionierte Maschine zur Herstellung von Blechpaketen eingesetzt, die sowohl die einzelnen Segmentbleche herstellt als auch verbindet, indem sie die Segmentbleche zunächst aus Blech ausschneidet, die ausgeschnittenen Segmentbleche zueinander ausgerichtet stapelt, so dass ein lose aufgebautes Blechpaket vorliegt, und sie miteinander verschweißt, um beispielsweise ein Statorblechpaket oder ein Rotorblechpaket auszubilden. Ein Verkleben der Segmentbleche ist in dieser Schrift nicht erwähnt.

Ein Verfahren und eine Vorrichtung zum automatischen Bilden von ausgerichteten Blechplattenpaketen zur Herstellung von Ankern elektrischer Maschinen oder dergleichen ist auch in der DE 694 01 541 T2 offenbart.

Ebenso sind in der DE 692 11 411 T2 eine Vorrichtung und ein Verfahren, um gestapelte Segmentbleche einer dynamoelektrischen Maschine auszurichten, beschrieben.

Ab einer bestimmten Größe der Segmentbleche müssen diese von Hand in eine Vorrichtung gebracht werden. Die Segmentbleche werden dabei von einem Mitarbeiter aus einem Vorrat einzeln herausgenommen und in einer Aufnahmevorrichtung einzeln abgelegt, wodurch ein erster Arbeitsschritt abgeschlossen ist. In einem zweiten Arbeitsschritt wird ein nächstes Segmentblech aus dem Vorrat genommen und neben das schon in der Aufnahmevorrichtung abgelegte Segmentblech angelegt. Dieser Vorgang ist wie bereits erwähnt sehr zeitaufwändig. Die Fertigungszeiten von solchen Blechpaketen sind dadurch vergleichsweise lang.

Eine effektive Maßnahme zur Taktzeiterhöhung je Auflegen eines Segmentbleches wäre ein gleichzeitiges Auflegen mehrerer loser Bleche. Dabei besteht aber das Problem, dass mehrere Bleche während eines Transportes nicht zugleich gegriffen werden können. Oft verschieben sich die Bleche gegeneinander und können dadurch nicht mehr genau positioniert abgelegt werden.

Aufgabe der vorliegenden Erfindung ist es daher, ein Verfahren zur schnelleren Herstellung eines Blechpakets für eine dynamoelektrische Maschine, insbesondere eine Maschine, deren Blechpaket in Umfangsrichtung aus mehreren Segmentblechen zusammengesetzt ist, anzugeben. Eine weitere Aufgabe der vorliegenden Erfindung ist es, ein Blechpaket und eine dynamoelektrische Maschine anzugeben, die sich durch eine schnelle Herstellbarkeit auszeichnen.

Die auf das Verfahren hin gerichtete Aufgabe wird gelöst durch ein Verfahren zur Herstellung eines Blechpakets einer dynamoelektrischen Maschine, die durch folgende Schritte gekennzeichnet ist:
a) Greifen eines ersten Segmentbleches,
b) Ablegen des ersten Segmentbleches,
c) Greifen eines zweiten Segmentbleches,
d) Ablegen des zweiten Segmentbleches auf das erste Segmentblech,
e) Verbinden des ersten mit dem zweiten Segmentblech zu einer Segmentblechgruppe,
f) Greifen der Segmentblechgruppe,
g) Ablegen der Segmentblechgruppe zu einem Blechpaket.

Der Vorteil der Erfindung ist unter anderem darin zu sehen, dass nunmehr statt einem Segmentblech, das momentan einzeln aus einem Vorrat genommen wird und jeweils einzeln abgelegt wird, zumindest zwei Segmentbleche genommen werden, die miteinander verbunden sind. Durch das Tragen bzw. Ablegen von zumindest zwei Segmentblechen wird die Fertigungszeit für das Blechpaket zumindest halbiert.

Ein weiterer Vorteil entsteht, da zumindest zwei Segmentbleche, die zu einer Segmentblechgruppe miteinander verbunden werden, sehr kompakt ausgebildet werden können, was zu einem geringeren Volumen des Blechpakets führt.

In einer vorteilhaften Ausführungsform werden statt zwei Segmentblechen, die zu einer Segmentblechgruppe verbunden werden, weitere oder mehrere weitere Segmentbleche zu einer Segmentblechgruppe verbunden.

Dadurch ist es möglich, die Fertigungszeiten noch weiter zu verkürzen, da durch das Tragen und Ablegen der Segmentblechgruppe gleich mehrere Segmentbleche bewegt werden. Ein ganzes Blechpaket wird dadurch sehr viel schneller aufgebaut.

In einer vorteilhaften Ausgestaltung werden die Segmentbleche in der Segmentblechgruppe miteinander verklebt oder verschweißt.

Natürlich können auch mehrere Segmentbleche in der Segmentblechgruppe miteinander verklebt oder/und verschweißt werden.

Die auf das Blechpaket hin gerichtete Aufgabe wird gelöst durch ein Blechpaket einer dynamoelektrischen Maschine, die aus mindestens zwei Gruppen untereinander verbundener Segmentbleche besteht.

Die Segmentbleche in der Segmentblechgruppe werden dabei miteinander verklebt oder verscheißt oder verklebt und verschweißt.

Ausführungsbeispiele der Erfindung werden nachfolgend unter Bezugnahme auf die Zeichnungen näher beschrieben. Dabei haben mit den selben Bezugszeichen versehene Komponenten die gleiche Funktionsweise.

Dabei zeigen:
- Figur 1: eine perspektivische Darstellung eines Stators einer dynamoelektrischen Maschine;
- Figur 2: eine Draufsicht eines Segmentbleches;
- Figur 3: eine schematische Darstellung einzelner Verfahrensschritte.

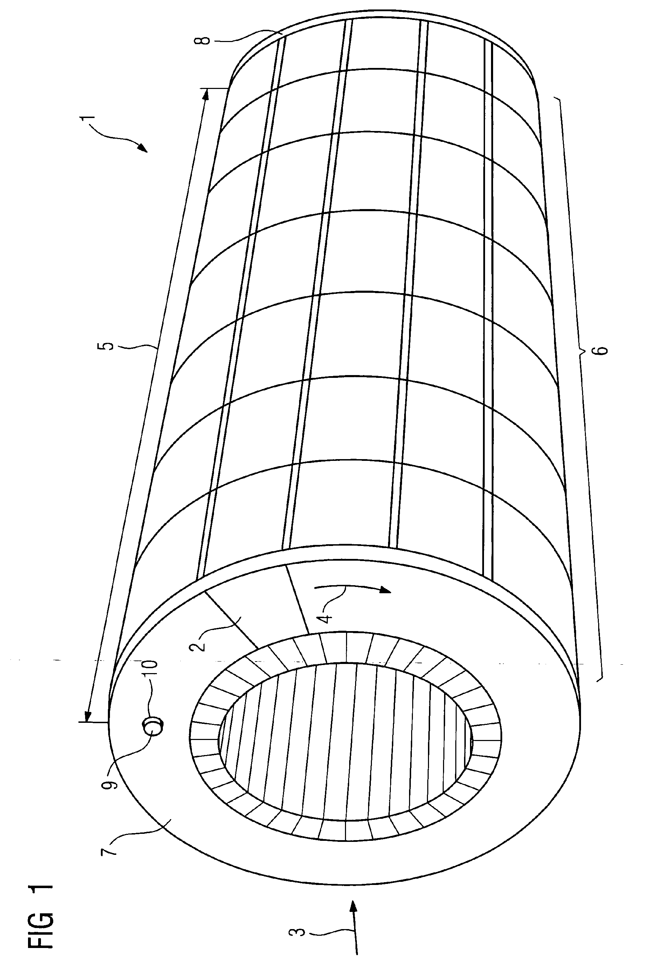

In Figur 1 ist eine perspektivische Darstellung eines Stators einer dynamoelektrischen Maschine 1 zu sehen. Die dynamoelektrische Maschine 1 ist um eine nicht näher dargestellte Rotationsachse rotationssymmetrisch aufgebaut. Ein elektrischer Generator als Ausführungsform einer dynamoelektrischen Maschine 1 besteht aus physikalischen Gründen aus einer Vielzahl von Segmentblechen 2. In der Figur 1 ist sehr grob und nur schematisch eine Draufsicht eines Segmentbleches 2 dargestellt. Das Segmentblech 2 wird üblicherweise aus Stahl gefertigt. Die Segmentbleche 2 werden in einer Ausdehnungsrichtung 3 aneinander gestapelt und in einer Umfangsrichtung 4 nebeneinander angelegt. Im fertigen Zustand wird dann ein komplettes Blechpaket 6 über eine Länge 5 ausgebildet.

Die Segmentbleche 2 sind üblicherweise elektrisch gegeneinander isoliert. Je nach Leistungsgröße der dynamoelektrischen Maschine 1 weist das Blechpaket 6 zwischen 10.000 bis 150.000 Segmentbleche auf.

Üblicherweise werden solche dynamoelektrischen Maschinen 1 derart aufgebaut, dass zwischen zwei Druckplatten 7, 8 die Segmentbleche 2 bzw. das Blechpaket 6 mittels sogenannter Zuganker 9 zusammengedrückt werden. Der Zuganker 9 ist üblicherweise eine Stahlgewindestange, die über eine Bohrung 10 in der Druckplatte 7, 8 als auch in den einzelnen Segmentblechen 2 über die gesamte Länge 5 ausgebildet ist.

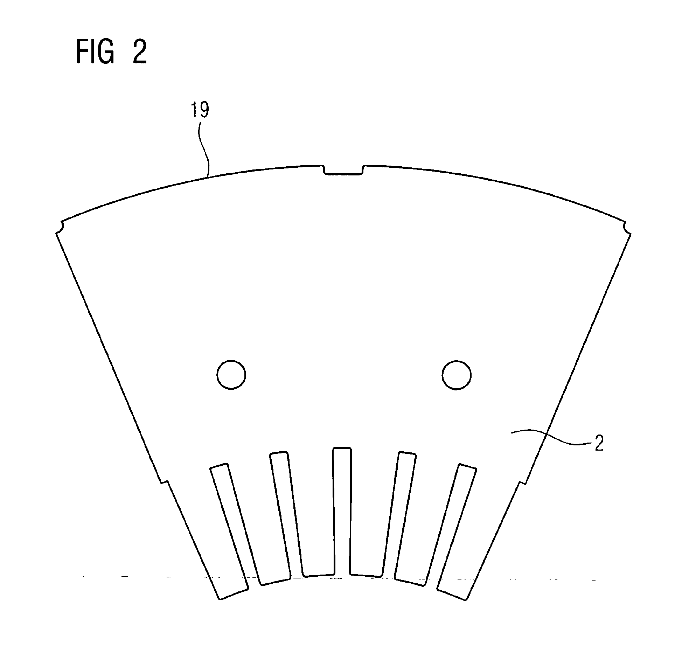

In der Figur 2 ist ein einzelnes Segmentblech 2 dargestellt.

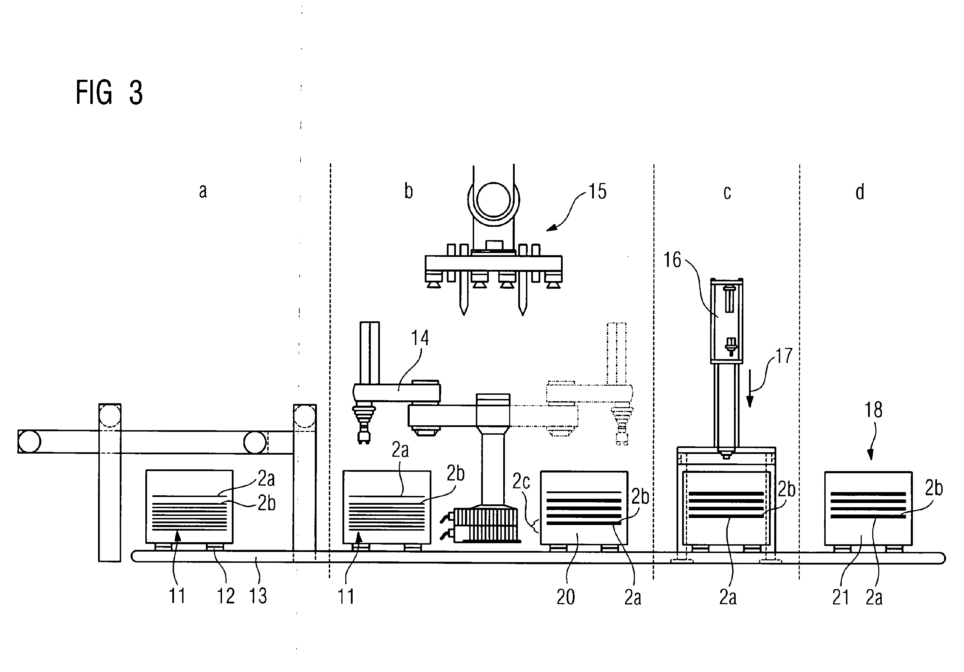

In der Figur 3 ist eine schematische Darstellung eines Verfahrens zur Herstellung von Blechpaketen 6 dargestellt.

Es werden zunächst einzelne Segmentbleche 2 übereinander zu einem Vorratsstapel 11 abgelegt. In einem Bereich a wird der Vorratstapel auf einer Palette 12 abgelegt. Die Palette 12 mit dem Vorratsstapel 11 wird über eine Transportanlage 13 in einen Bereich b transportiert. Im Bereich b ist ein Roboter 14 oder "Linear-Feeder". Der Roboter 14 greift ein erstes Segmentblech 2a aus dem Vorratsstapel 11 und legt es auf einer Positionierplatte 20 ab. Der Roboter 14 greift anschließend ein zweites Segmentblech 2b. Während eines Umstapelprozesses des ersten Segmentbleches 2a von dem Vorratsstapel 11 zur Positionierplatte 14 wird eine Oberfläche jedes zweiten vom Roboter 14 gegriffenen Segmentbleches 2b mit einer Dosiereinrichtung 15 mit Klebstoff versehen. Auf der Positionierplatte 20 entstehen somit Segmentblechgruppen 2c, die zumindest aus zwei Segmentblechen 2a, 2b bestehen. In einer alternativen Ausführungsform wird ein weiteres oder mehrere weitere Segmentbleche 2 zu der Segmentblechgruppe 2c verbunden.

Damit in einer alternativen Ausführungsform drei Segmentbleche 2 zu einer Segmentblechgruppe 2c zusammengefasst werden, darf ein Segmentblech 2 nicht mit Klebstoff versehen werden. Es wird zunächst das erste Segmentblech 2a aus dem Vorratsstapel 11 mit dem Roboter 14 entnommen und auf der Positionierplatte 20 abgelegt. Das zweite Segmentblech 2b wird vom Roboter 14 entnommen und die Unterseite mit Hilfe der Dosiereinrichtung 15 mit Klebstoff oder ähnlichem versehen. Das mit Klebstoff versehene Segmentblech 2b wird auf das erste Segmentblech 2a unter Krafteinwirkung angebracht. Der Roboter 14 entnimmt in einem nächsten Schritt ein drittes Segmentblech 2 aus dem Vorratsstapel 11, versieht dieses mit Klebstoff und legt es auf die beiden ersten bereits miteinander verklebten Segmentbleche 2a, 2b ab. Das Ablegen des dritten Segmentbleches 2 auf die beiden ersten verbundenen Segmentbleche 2a, 2b geschieht unter einer gewissen Krafteinwirkung. Somit ist eine Segmentblechgruppe 2c ausgebildet, bestehend aus drei Segmentblechen 2, 2a, 2b. Der Roboter 14 nimmt in einem nächsten Schritt ein weiteres Segmentblech 2, das nicht mit Klebstoff versehen wird und legt diese auf die bereits miteinander verbundenen drei Segmentbleche 2, 2a, 2b. In einer alternativen Ausführungsform kann der Klebstoff auch auf die Oberseite eines Segmentbleches aufgebracht werden. Dann muss das Segmentblech 2a mit Klebstoff auf der Oberseite versehen werden, das zweite Segmentblech 2b mit Klebstoff auf der Oberseite versehen werden und das dritte Segmentblech nicht mit Klebstoff versehen werden. In der vorher beschriebenen Weise werden dann vom Roboter 14 weitere Segmentbleche 2 entnommen, mit Klebstoff versehen und zu Segmentblechgruppen 2c, bestehend aus drei Segmentblechen 2, ausgebildet.

In einer alternativen Ausführungsform können selbstverständlich Segmentblechgruppen 2c, bestehend aus vier Segmentblechen 2 oder mehr ausgebildet werden. Dazu muss jeweils ein Segmentblech 2 nicht mit Klebstoff versehen werden.

Nach einer gewissen Anzahl an Segmentblechgruppen 2c, die auf der Positionierplatte 20 gestapelt werden, wird die Positionierplatte 20 mittels der Transportanlage 13 zu einem Bereich c bewegt. Im Bereich c übt eine Hydraulikanlage 16 eine Kraft in eine Richtung 17 aus, die dazu führt, dass die Segmentblechgruppen 2c sehr eng zusammengepresst werden.

Statt der Dosiereinrichtung 15, die jeweils Segmentbleche 2, 2a, 2b miteinander verklebt, kann auch eine nicht dargestellte Schweißanlage eingesetzt werden, um die Segmentbleche 2a, 2b untereinander zu der Segmentblechgruppe 2c zu verbinden. Die Schweißanlage muss derart ausgebildet sein, dass zumindest zwei Segmentbleche 2a, 2b miteinander verschweißt werden können. Dies kann durch Punktschweißen oder durch ähnliche Schweißvorgänge erreicht werden.

Diese Schweißvorgänge sollten an einem Umfang 19 der einzelnen Segmentbleche 2a, 2b erfolgen. Dies verursacht Kurzschlüsse zwischen den Segmentblechen, was zu veränderten magnetischen Eigenschaften führt.

Im Bereich d schließlich gelangen die gepressten Segmentblechgruppen 2c in einen Transportbehälter 19 in eine Auswurfzone 18. Der Transportbehälter 19 muss anschließend in geschickter Weise an den Fertigungsort des Blechpaketes 6 gebracht werden. Dort werden die einzelnen Segmentblechgruppen 2c von Hand oder teilautomatisiert aus dem Transportbehälter 19 gegriffen. Anschließend werden die Segmentblechgruppen 2c zu einem Blechpaket 6 für die dynamoelektrische Maschine 1 abgelegt.

Das Blechpaket 6 für die dynamoelektrische Maschine 1 besteht aus einer Vielzahl Segmentblechgruppen 2c.

## Patentansprüche

1. Verfahren zur Herstellung eines Blechpaketes (6) für eine dynamoelektrische Maschine (1),
**gekennzeichnet durch** folgende Schritte:
a) Greifen eines ersten Segmentbleches (2a)
b) Ablegen des ersten Segmentbleches (2a)
c) Greifen eines zweiten Segmentbleches (2b)
d) Ablegen des zweiten Segmentbleches (2b) auf das erste Segmentblech (2a),
e) Verbinden des ersten (2a) mit dem zweiten Segmentblech (2b) zu einer Segmentblechgruppe (2c)
f) Greifen der Segmentblechgruppe (2c)
g) Ablegen der Segmentblechgruppe (2c) zu einem Blechpaket (6).

2. Verfahren nach Anspruch 1,
**dadurch gekennzeichnet,**
**dass** eine weitere oder mehrere weitere Segmentbleche mit der Segmentblechgruppe (2c) verbunden wird oder verbunden werden.

3. Verfahren nach einem der Ansprüche 1 bis 2,
**dadurch gekennzeichnet,**
**dass** im Schritt e) die Segmentbleche in der Segmentblechgruppe (2c) miteinander verklebt werden.

4. Verfahren nach einem der Ansprüche 1 bis 2,
**dadurch gekennzeichnet,**
**dass** im Schritt e) die Segmentbleche in der Segmentblechgruppe (2c) miteinander verschweißt werden.

5. Blechpaket (6) für eine dynamoelektrische Maschine, bestehend aus mindestens zwei Segmentblechgruppen (2c).

6. Blechpaket (6) nach Anspruch 5,
wobei die Segmentbleche in der Segmentblechgruppe (2c) miteinander verklebt sind.

7. Blechpaket (6) nach Anspruch 5,
wobei die Segmentbleche in der Segmentblechgruppe (2c) miteinander verschweißt sind.

8. Dynamoelektrische Maschine (1) mit einem Blechpaket (6) nach einem der Ansprüche 5 bis 7.
